# EUROPÄISCHE PATENTSCHRIFT

(11) **EP 3 704 925 B1**
(45) Veröffentlichungstag und Bekanntmachung des Hinweises auf die Patenterteilung: **08.12.2021**
(21) Anmeldenummer: 20401004.5
(22) Anmeldetag: 22.01.2020
(51) Int. Cl.: A01C 7/08, A01C 7/20, A01C 7/10

(54) **SÄMASCHINE**
SOWING MACHINE
SEMOIR

(30) Priorität: 04.03.2019 DE 102019105329
(43) Veröffentlichungstag der Anmeldung: 09.09.2020
(73) Patentinhaber: Amazonen-Werke H. Dreyer SE & Co. KG, 49205 Hasbergen (DE)
(72) Erfinder: Mertens, Daniel, 26121 Oldenburg (DE)

(56) Entgegenhaltungen:
- EP-A1- 2 430 896
- DE-A1- 3 927 717
- DE-A1-102014 223 095
- DE-B1- 3 017 415
- DE-C1- 3 301 087

## Beschreibung

Die Erfindung betrifft eine Sämaschine nach dem Oberbegriff des Patentanspruchs 1 und ein Verfahren zum Einstellen einer Sämaschine nach dem Oberbegriff des Patentanspruchs 9. Eine derartige Sämaschine ist in DE 33 01 087 C1 offenbart.

Bei der Bewirtschaftung von landwirtschaftlichen Nutzflächen wird beim Ausbringen von Saatgut üblicherweise ein Fahrgassensystem angelegt, welches bei nachfolgenden Arbeitsvorgängen auf der landwirtschaftlichen Nutzfläche, beispielsweise bei der Ausbringung von Pflanzenschutzmitteln oder Dünger, zu verwenden ist.

Aufgrund der üblichen Reihenweiten, welche beim Ausbringen von Saatgut zur Erzielung eines hohen Ertrags zu berücksichtigen sind, ist es bisher erforderlich, einzelne Säaggregate der Sämaschine beim Ausbringen des Saatguts vollständig abzuschalten. Durch die vollständige Abschaltung eines Säaggregats ergibt sich in diesem Bereich in etwa eine Verdoppelung des Reihenabstands, sodass es zur Anlage einer Fahrgasse kommt.

Die Abschaltung einzelner Säaggregate führt jedoch zu einer reduzierten Pflanzenanzahl auf der landwirtschaftlichen Nutzfläche und wird aus diesem Grund in der Praxis nur bedingt akzeptiert. Dies gilt insbesondere bei Reihenweiten von mehr als 600mm, da eine entsprechende Reihenabschaltung in diesen Fällen zu einem erheblichen Ertragsverlust führt.

Zusätzlich zu dem Ertragsverlust durch die Reihenabschaltung ergibt sich eine starke Verunkrautung in den sich ergebenden vergleichsweise großen Zwischenräumen, welche die Fahrgasse bilden, wodurch der Ertragsverlust weiter ansteigt.

Im Stand der Technik sind zur Behebung dieses Problems bereits Sämaschinen bekannt, deren Säaggregate manuell durch den Benutzer positionierbar sind. Die manuelle Positionierung einzelner Säaggregate ist jedoch mit einem erheblichen Aufwand verbunden, sodass sich entsprechende Sämaschinen in der Praxis bisher nicht durchsetzen konnten.

Weitere, als Einzelkornsämaschinen ausgeführte, Sämaschinen sind in DE 39 27 717 A1 und EP 2 430 896 A1 offenbart. In der DE 30 17 415 B1 ist ferner ein Steuersystem für Drillmaschinen offenbart.

Die der Erfindung zugrundeliegende Aufgabe besteht somit darin, die Anlage bedarfsgerechter Fahrgassen beim Aussäen von Saatgut auf eine landwirtschaftliche Nutzfläche zu vereinfachen.

Die Aufgabe wird gelöst durch eine Sämaschine mit den Merkmalen des Anspruchs 1. Die erfindungsgemäße Sämaschine weist zumindest ein fernsteuerbares Verstellglied auf, welches dazu eingerichtet ist, das zumindest eine verschiebbare Säaggregat quer zur Fahrtrichtung zu verschieben.

Die Erfindung macht sich die Erkenntnis zunutze, dass durch den Einsatz eines fernsteuerbaren Verstellglieds der Einstellaufwand zum Positionieren eines Säaggregats erheblich verringert wird, wodurch die Nutzerakzeptanz beträchtlich steigt. Die erfindungsgemäße Sämaschine erlaubt somit die Umsetzung einer fernsteuerbaren Fahrgassenschaltung. Die Abschaltung einzelner Säaggregate ist aufgrund der Verschiebbarkeit des zumindest einen Säaggregats nicht länger erforderlich, sodass ein Ertragsverlust beim Anlegen eines Fahrgassensystems vermieden wird.

Die Sämaschine kann auch mehrere Säaggregate aufweisen, welche quer zur Fahrtrichtung verschiebbar sind. In diesem Fall kann die Sämaschine auch mehrere fernsteuerbare Verstellglieder aufweisen, welche jeweils dazu eingerichtet sind, ein oder mehrere Säaggregate quer zur Fahrtrichtung zu verschieben. Grundsätzlich kann über die Säaggregate der Sämaschine alternativ oder zusätzlich zu dem Saatgut auch Dünger abgelegt werden. Die Sämaschine kann über eine hydraulische oder eine mechanische Schardruckverstellung verfügen.

In einer bevorzugten Ausführungsform der erfindungsgemäßen Sämaschine ist das zumindest eine Verstellglied als hydraulischer, pneumatischer oder elektrischer Linearantrieb ausgebildet. Beispielsweise ist das zumindest eine Verstellglied als Hydraulikzylinder oder als Linearmotor ausgebildet oder umfasst einen Hydraulikzylinder oder einen Linearmotor. Über einen hydraulischen Linearantrieb können vergleichsweise große Kräfte übertragen werden, sodass auch schwere Säaggregate, welche beispielsweise zusätzlich zur Saatgutablage eine Düngerablage erlauben, quer zur Fahrtrichtung verschoben werden können. Ferner weisen hydraulische Linearantriebe üblicherweise einen einfachen Aufbau auf und sind ohne hohen konstruktiven Aufwand in die Maschinenkonstruktion integrierbar. Elektrische Linearantriebe ermöglichen eine präzise Positionierung der einzelnen Säaggregate und sind vergleichsweise einfach steuerbar bzw. regelbar.

Die erfindungsgemäße Sämaschine weist eine Steuerungseinrichtung auf, welche dazu eingerichtet ist, das zumindest eine Verstellglied zu steuern, wobei die Steuerungseinrichtung vorzugsweise dazu eingerichtet ist, signalübertragend mit einer Betätigungseinrichtung verbunden zu werden, über welche eine Verschiebung des zumindest einen Säaggregats aus der Ferne veranlassbar ist. Die Betätigungseinrichtung kann portabel ausgebildet sein. Die signalübertragende Verbindung zwischen der Steuerungseinrichtung und der Betätigungseinrichtung kann eine kabelgebundene oder eine drahtlose Verbindung sein. Die Betätigungseinrichtung kann grundsätzlich ein Bestandteil der Sämaschine sein. Alternativ kann die Betätigungseinrichtung auch ein externes Gerät sein, wobei die Sämaschine und die Betätigungseinrichtung in diesem Fall ein zusammengehöriges System ausbilden.

In einer anderen Ausführungsform der erfindungsgemäßen Sämaschine ist die Steuerungseinrichtung dazu eingerichtet, das zumindest eine Verstellglied selbsttätig auf Grundlage eines vorgeplanten Fahrgassensystems einzustellen. Das Fahrgassensystem für eine landwirtschaftliche Nutzfläche kann beispielsweise im Vorfeld durch einen Benutzer geplant werden. Die Planung des Fahrgassensystems kann über ein Verwaltungsprogramm für landwirtschaftliche Nutzflächen erfolgen, welches ein Benutzer beispielsweise über einen Computer oder ein mobiles Endgerät verwenden kann. Das vorgeplante Fahrgassensystem kann der Steuerungseinrichtung der Sämaschine beispielsweise als Datei bereitgestellt werden, wobei die Steuerungseinrichtung die Datei ausliest und das zumindest eine Verstellglied entsprechend selbsttätig einstellt. Alternativ oder zusätzlich kann das Fahrgassensystem auch über eine Bedieneinrichtung der Sämaschine geplant werden. Die Bedieneinrichtung teilt der Steuerungseinrichtung dann die entsprechenden Fahrgasseninformationen mit, woraufhin die Steuerungseinrichtung dann selbsttätig die Einstellung des zumindest einen Verstellglieds veranlasst.

Die erfindungsgemäße Sämaschine weist eine Überwachungseinrichtung auf, welche dazu eingerichtet ist, zu prüfen, ob das zumindest eine verschiebbare Säaggregat Bodenkontakt hat, wobei die Steuerungseinrichtung dazu eingerichtet ist, eine Betätigung des zumindest einen Verstellglieds zu verhindern, wenn das zumindest eine verschiebbare Säaggregat Bodenkontakt hat. Bevorzugt kann zusätzlich die Überwachungseinrichtung dazu eingerichtet sein, zu prüfen, ob das zumindest eine verschiebbare Säaggregat sich in einem angehobenen Zustand befindet und somit keinen Bodenkontakt hat, wobei die Steuerungseinrichtung in diesem Fall dazu eingerichtet ist, eine Betätigung des zumindest einen Verstellglieds freizugeben, wenn sich das zumindest eine verschiebbare Säaggregat in einem angehobenen Zustand befindet. Nicht erfindungsgemäß kann die Überwachungseinrichtung dazu eingerichtet sein zu prüfen, ob das zumindest eine verschiebbare Säaggregat Bodenkontakt hat, wobei die Steuerungseinrichtung dazu eingerichtet ist, eine Betätigung des zumindest einen Verstellglieds zu ermöglichen, wenn das zumindest eine verschiebbare Säaggregat Bodenkontakt hat. Beispielsweise auf besonders leichten Böden und/oder in Sonderfällen ist es denkbar, das verschiebbare Säaggregat in Bodenkontakt zu verschieben, damit es nicht ausgehoben werden muss. Durch die Überwachungseinrichtung können somit Beschädigungen durch eine Fehlbetätigung des zumindest einen Verstellglieds vermieden werden. Die Überwachungseinrichtung sorgt dafür, dass eine Verstellgliedbetätigung nur dann möglich ist, wenn die Verschiebbarkeit des zumindest einen verschiebbaren Säaggregats gewährleistet ist.

In einer anderen bevorzugten Ausführungsform der erfindungsgemäßen Sämaschine ist die Steuerungseinrichtung dazu eingerichtet, die Aussaatmenge an dem zumindest einen verschiebbaren Säaggregat und/oder einem benachbart zu dem zumindest einen verschiebbaren Säaggregat angeordneten Säaggregat unabhängig von den Aussaatmengen der übrigen Säaggregate zu verändern.

Die Steuerungseinrichtung kann auch dazu eingerichtet sein, die Ausbringmenge an Dünger oder Mikrogranulat des zumindest einen verschiebbaren Säaggregats und/oder eines benachbart zu dem zumindest einen verschiebbaren Säaggregat angeordneten Säaggregats unabhängig von den Ausbringmengen an Dünger oder Mikrogranulat der übrigen Säaggregate zu verändern. Das Verändern der Aussaatmenge, der Ausbringmenge an Dünger und/oder der Ausbringmenge an Mikrogranulat betrifft vorzugsweise ein Reduzieren der Aussaatmenge, der Ausbringmenge an Dünger oder der Ausbringmenge an Mikrogranulat. Insofern erlaubt die Steuerungseinrichtung vorzugsweise ebenfalls eine Reduzierung der Aussaatmenge bzw. der Ausbringmenge an Dünger oder Mikrogranulat auf null. Insbesondere kann die Steuerungseinrichtung dazu eingerichtet sein, die Aussaatmenge bzw. die Ausbringmenge an Dünger oder Mikrogranulat des zumindest einen verschiebbaren Säaggregats und/oder eines benachbart zu dem zumindest einen verschiebbaren Säaggregat angeordneten Säaggregats selbsttätig in Abhängigkeit einer Verschiebung, insbesondere eines eingestellten Verschiebewegs, des zumindest einen verschiebbaren Säaggregats anzupassen. Insbesondere bei der Anpassung der Aussaatmenge können auch saatgutspezifische Kriterien berücksichtigt werden.

In einer anderen bevorzugten Ausführungsform der erfindungsgemäßen Sämaschine ist das Verstellglied dazu eingerichtet, das zumindest eine verschiebbare Säaggregat zumindest 100mm vorzugsweise zumindest 200mm, besonders bevorzugt zumindest 300mm quer zur Fahrtrichtung zu verschieben. Der maximale Verschiebeweg, welcher über das Verstellglied umsetzbar ist, kann beispielsweise bei 350mm oder 400mm liegen.

In einer bevorzugten Weiterbildung der erfindungsgemäßen Sämaschine ist das zumindest eine Verstellglied dazu eingerichtet, das zumindest eine verschiebbare Säaggregat auf einen Abstand von zumindest 800mm, vorzugsweise zumindest 900mm, besonders bevorzugt zumindest 1000mm, zu einem benachbarten Säaggregat quer zur Fahrtrichtung zu verschieben. Auf diese Weise können vergleichsweise breite Fahrgassen erzeugt werden. Innerhalb einer solchen Fahrgasse kann dann ein Reifen der Sämaschine oder ein Reifen eines die Sämaschine tragenden oder ziehenden Fahrzeugs bewegt werden. Das Verstellglied kann ferner dazu eingerichtet sein, das verschiebbare Säaggregat schrittweise quer zur Fahrtrichtung zu verschieben. Beispielsweise kann das Verstellglied eine Verschiebung des Säaggregats in 25mm Schritten ermöglichen. Beispielsweise weist das Verstellglied auswechselbare Anschlagselemente auf, wobei über die Abmaße der Anschlagselemente der Verstellweg einstellbar ist. Die Anschlagselemente können als Stangenaufsätze ausgebildet sein, welche auf eine Kolbenstange des zumindest einen Verstellglieds aufgesetzt werden können. Vorzugsweise können die Anschlagselemente auf die Kolbenstange des zumindest einen Verstellglieds aufgeklipst werden.

In einer anderen bevorzugten Ausführungsform der erfindungsgemäßen Sämaschine ist die Position mehrerer oder sämtlicher Säaggregate an dem Maschinenrahmen zur Einstellung unterschiedlicher Reihenweiten veränderbar. Beispielsweise können durch eine Veränderung der Position mehrerer oder sämtlicher Säaggregate an dem Maschinenrahmen Reihenweiten von 600mm, 700mm, 750mm oder 800mm eingestellt werden.

Die der Erfindung zugrundeliegende Aufgabe wird ferner durch ein Verfahren gemäß Anspruch 9 gelöst. Im Rahmen des erfindungsgemäßen Verfahrens wird mittels eines fernsteuerbaren Verstellglieds der Sämaschine zumindest ein Säaggregat der Sämaschine verschoben wird. Insbesondere wird mittels des erfindungsgemäßen Verfahrens eine Sämaschine nach einer der vorstehend beschriebenen Ausführungsformen eingestellt. Hinsichtlich der Vorteile und Modifikationen des erfindungsgemäßen Verfahrens wird zunächst auf die Vorteile und Modifikationen der erfindungsgemäßen Sämaschine verwiesen.

In einer bevorzugten Ausführungsform des erfindungsgemäßen Verfahrens wird das zumindest eine Verstellglied mittels einer Steuerungseinrichtung der Sämaschine gesteuert. Alternativ oder zusätzlich wird eine Verschiebung des zumindest einen Säaggregats aus der Ferne veranlasst, vorzugsweise über eine signalübertragend mit der Steuerungseinrichtung verbundene Betätigungseinrichtung. Vorzugsweise umfasst das Verfahren das drahtlose oder kabelgebundene Senden eines Steuerungsbefehls zum Einstellen des zumindest einen Verstellglieds von der Betätigungseinrichtung an die Steuerungseinrichtung. Das Veranlassen der Verschiebung des zumindest einen Säaggregats kann beispielsweise durch das Verändern eines dem zumindest einen Verstellglied bereitgestellten Hydraulikdrucks oder Pneumatikdrucks erfolgen. Alternativ kann eine Verschiebung des zumindest einen Säaggregats über das Bereitstellen von elektrischer Energie für das zumindest eine Verstellglied erfolgen.

In einer weiteren bevorzugten Ausführungsform des erfindungsgemäßen Verfahrens erfolgt das Steuern des zumindest einen Verstellglieds und/der das Veranlassen der Verschiebung des zumindest einen Säaggregats selbsttätig durch die Sämaschine auf Grundlage eines der Sämaschine bereitgestellten vorgeplanten Fahrgassensystems. Das vorgeplante Fahrgassensystem kann der Sämaschine beispielsweise über eine Datei bereitgestellt werden. Die Datei kann beispielsweise kabellos oder kabelgebunden auf die Sämaschine übertragen werden.

In dem Rahmen des erfindungsgemäßen Verfahrens erfolgt ein Überwachen, ob das zumindest eine verschiebbare Säaggregat Bodenkontakt hat, und ein Verhindern einer Betätigung des zumindest einen Verstellglieds, wenn das zumindest eine verschiebbare Säaggregat Bodenkontakt hat. Bevorzugt kann zusätzlich das Verfahren das Freigeben einer Betätigung des zumindest einen Verstellglieds umfassen, wenn das zumindest eine verschiebbare Säaggregat sich in einem angehobenen Zustand befindet und somit keinen Bodenkontakt hat. Nicht erfindungsgemäß ist ein zerstörungsfreies Verschieben in Bodenkontakt, beispielsweise auf besonders leichten Böden oder durch einen angepassten, insbesondere verlangsamten, Verschiebevorgang.

Ferner kann das erfindungsgemäße Verfahren das Verändern der Aussaatmenge an dem zumindest einen verschiebbaren Säaggregat und/oder einem benachbart zu dem zumindest einen verschiebbaren Säaggregat angeordneten Säaggregat unabhängig von den Aussaatmengen der übrigen Säaggregate umfassen. Das Verfahren kann auch das Verändern der Ausbringmenge an Dünger oder Mikrogranulat des zumindest einen verschiebbaren Säaggregats und/oder eines benachbart zu dem zumindest einen verschiebbaren Säaggregat angeordneten Säaggregats unabhängig von den Ausbringmengen an Dünger oder Mikrogranulat der übrigen Säaggregate umfassen. Das Verändern betrifft hierbei vorzugsweise ein Reduzieren der Aussaatmenge bzw. der Ausbringmenge an Dünger oder Mikrogranulat. Das Verfahren kann ferner das selbsttätige Anpassen der Aussaatmenge bzw. der Ausbringmenge an Dünger oder Mikrogranulat des zumindest einen verschiebbaren Säaggregats und/oder eines benachbart zu dem zumindest einen verschiebbaren Säaggregat angeordneten Säaggregats in Abhängigkeit einer Verschiebung, insbesondere eines eingestellten Verschiebewegs, des zumindest einen verschiebbaren Säaggregats umfassen.

Nachfolgend werden bevorzugte Ausführungsformen der Erfindung unter Bezugnahme auf die beiliegenden Zeichnungen näher erläutert und beschrieben. Dabei zeigen:
- Fig. 1: einen Maschinenrahmen einer erfindungsgemäßen Sämaschine mit mehreren Säaggregaten in einer Rückansicht;
- Fig. 2: den in der Fig. 1 dargestellten Maschinenrahmen samt Säaggregaten mit einem quer zur Fahrtrichtung verschobenen Säaggregat;
- Fig. 3: einen Maschinenrahmen einer erfindungsgemäßen Sämaschine mit mehreren Säaggregaten bei zwei aufeinanderfolgenden Fahrten in entgegengesetzte Fahrtrichtungen;
- Fig. 4: den in der Fig. 1 dargestellten Maschinenrahmen samt Säaggregaten mit zwei quer zur Fahrtrichtung verschobenen Säaggregaten;
- Fig. 5: einen Maschinenrahmen einer anderen erfindungsgemäßen Sämaschine mit mehreren Säaggregaten in einer Rückansicht;
- Fig. 6: den in der Fig. 5 dargestellten Maschinenrahmen samt Säaggregaten mit zwei quer zur Fahrtrichtung verschobenen Säaggregaten;
- Fig. 7: eine Detaildarstellung eines Verstellglieds einer erfindungsgemäßen Sämaschine;
- Fig. 8: eine Detaildarstellung einer Scharaufhängung einer erfindungsgemäßen Sämaschine;
- Fig. 9: ein Verstellglied einer erfindungsgemäßen Sämaschine in einer perspektivischen Darstellung;
- Fig. 10: ein Verstellglied einer erfindungsgemäßen Sämaschine in einer schematischen Schnittdarstellung;
- Fig. 11: eine Detaildarstellung eines Verstellglieds einer erfindungsgemäßen Sämaschine;
- Fig. 12: ein Anschlagselement für ein Verstellglied in einer perspektivischen Darstellung;
- Fig. 13: ein weiteres Anschlagselement für ein Verstellglied in einer perspektivischen Darstellung und;
- Fig. 14: eine Detaildarstellung einer Scharaufhängung einer erfindungsgemäßen Sämaschine.

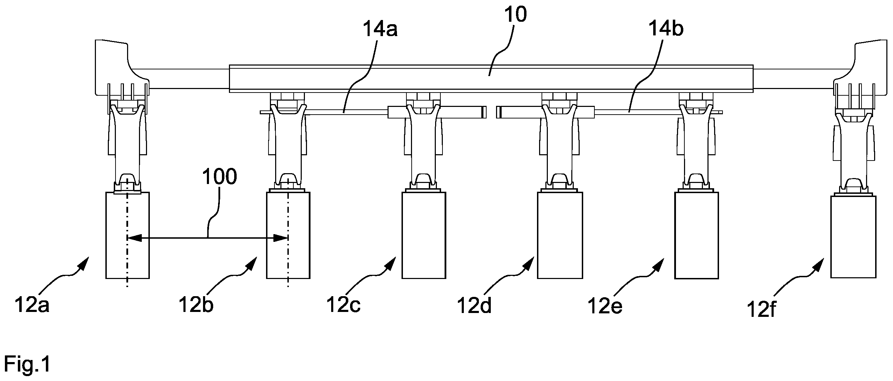

Die Fig. 1 zeigt einen Maschinenrahmen 10 einer Sämaschine, wobei mittels der Sämaschine Saatgut und/oder Dünger auf eine landwirtschaftliche Nutzfläche ausbringbar ist. Der Maschinenrahmen 10 erstreckt sich quer zur Fahrtrichtung F der Sämaschine und kann teleskopierbar ausgebildet sein. An dem Maschinenrahmen 10 sind mehrere, vorliegend sechs, Säaggregate 12a-12f befestigt. Zumindest die Säaggregate 12b, 12e sind quer zur Fahrtrichtung F verschiebbar an dem Maschinenrahmen 10 befestigt. Die Säaggregate 12b, 12e sind jeweils mit einem Verstellglied 14a, 14b verbunden, wobei über eine Fernbetätigung der Verstellglieder 14a, 14b die Säaggregate 12b, 12e quer zur Fahrtrichtung F verschiebbar sind. Die Verstellglieder 14a, 14b sind jeweils als hydraulische Linearantriebe, nämlich als Hydraulikzylinder, ausgebildet.

Die Sämaschine weist ferner eine Steuerungseinrichtung auf, mittels welcher die Verstellglieder 14a, 14b gesteuert werden können, wobei die Steuerungseinrichtung der Sämaschine signalübertragend mit einer Betätigungseinrichtung verbunden ist, über welche eine Verschiebung der Säaggregate 12b, 12e quer zur Fahrtrichtung F aus der Ferne veranlassbar ist. Die Betätigungseinrichtung dient somit als Fernbedienung für die verschiebbaren Säaggregate 12b, 12e, wobei die signalübertragende Verbindung zwischen der Steuerungseinrichtung der Sämaschine und der Betätigungseinrichtung eine drahtlose Verbindung ist. In dem in der Fig. 1 dargestellten Zustand sind die Säaggregate 12a-12f äquidistant zueinander beabstandet angeordnet, sodass sich zwischen benachbarten Säaggregaten 12a-12f jeweils ein Abstand ergibt, welcher der Reihenweite 100 entspricht.

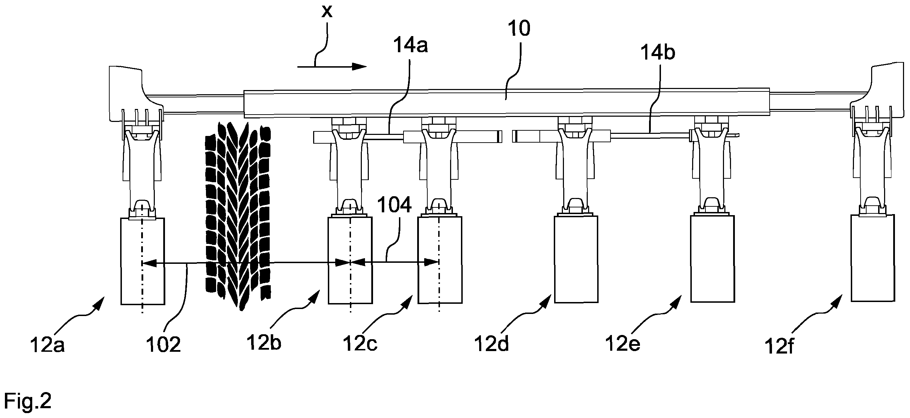

In dem in der Fig. 2 dargestellten Zustand wurde das Säaggregat 12b durch eine Fernbetätigung des fernsteuerbaren Verstellglieds 14a in die Verschieberichtung x bewegt. Da die Verstellglieder 14a, 14b der Sämaschine unabhängig voneinander einstellbar sind, können die Säaggregate 12b, 12e auch unabhängig voneinander quer zur Fahrtrichtung F verschoben werden. Durch die Betätigung des Verstellglieds 14a wird ein neuer Abstand 102 zwischen den Säaggregaten 12a, 12b eingestellt, wobei die Arbeitsbreite beibehalten wird. Bei einer Reifenbreite von 700mm und einer Reihenweite 100 von 750mm kann der eingestellte Abstand 102 beispielsweise 1050mm betragen, sodass zwischen den durch die Säaggregate 12a, 12b ausgebrachten Saatreihen und der Reifenspur ein Abstand von 175mm erreicht wird. Entsprechend beträgt der Abstand 104 zwischen dem Säaggregat 12b und dem Säaggregat 12c 450mm. Derartige Abstände eignen sich beispielsweise für die Aussaat von Mais.

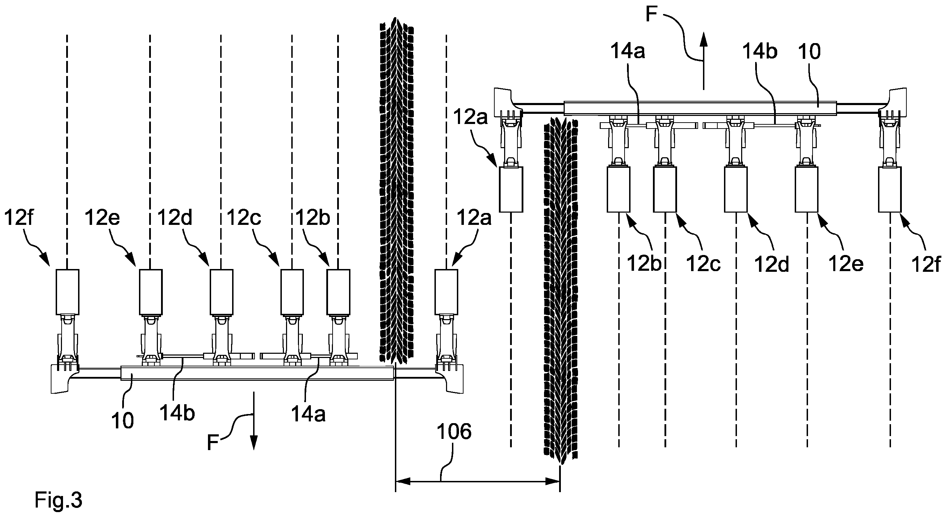

Die Fig. 3 zeigt, wie durch zwei aufeinanderfolgende Fahrten in entgegengesetzte Fahrtrichtungen F eine Fahrgasse mit zwei Fahrspuren angelegt werden kann, sodass sich eine Spurweite 106 ergibt. Die Spurweite 106 kann beispielsweise 1800mm sein. Ferner sind mit der Sämaschine auch Fahrgassen mit Spurweiten von 2000mm oder mehr als 2000mm umsetzbar.

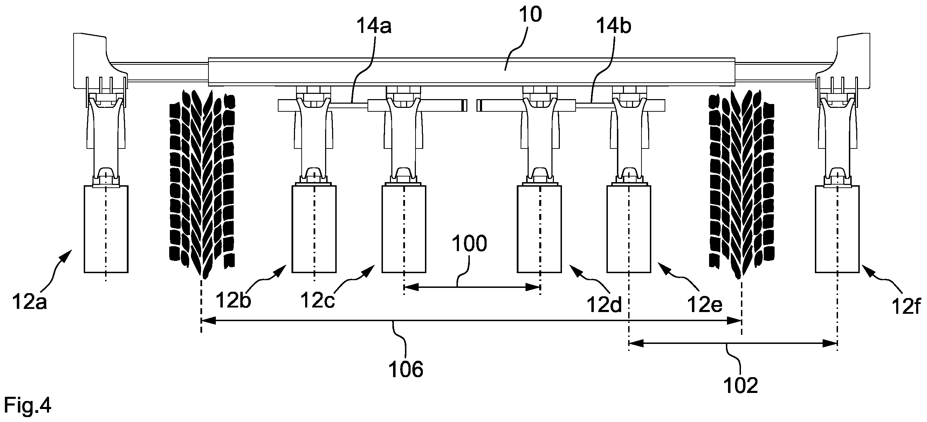

In dem in Fig. 4 dargestellten Zustand wurden die Säaggregate 12b, 12e durch eine Fernbetätigung der Verstellglieder 14a, 14b nach innen verfahren, sodass eine Fahrgasse mit einer nochmals gesteigerten Spurweite 106 angelegt werden kann. Ausgehend von einer Reihenweite 100 von 750mm wurden die Säaggregate 12b, 12e vorliegend derart verfahren, dass sich eine Fahrgasse mit einer Spurweite 106 von 2700mm ergibt. Die Säaggregate 12a und 12b sowie die Säaggregate 12e und 12f weisen einen Abstand 102 von 1050mm zueinander auf.

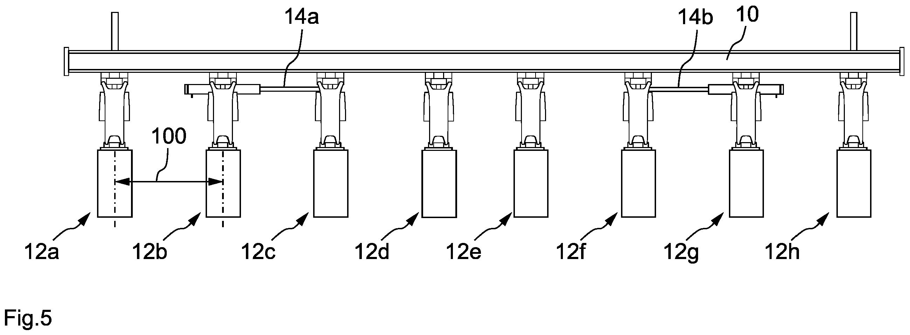

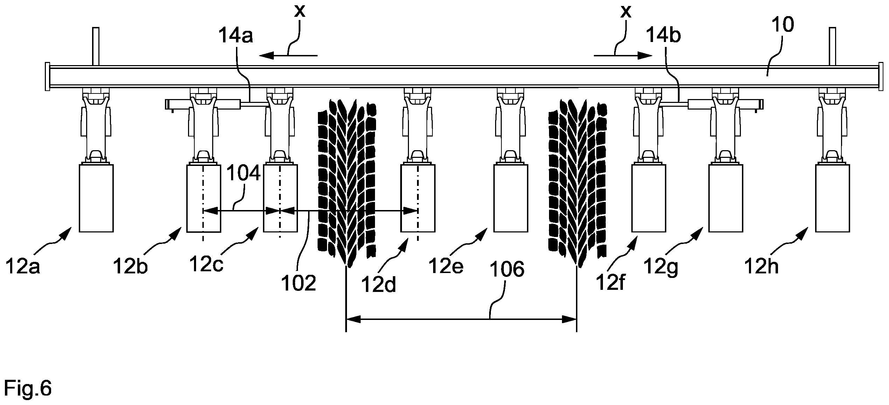

Die Fig. 5 und die Fig. 6 zeigen einen Maschinenrahmen 10, an welchem acht Säaggregate 12a-12h befestigt sind. Zumindest die Säaggregate 12c und 12f sind über die fernbetätigbaren Verstellglieder 14a, 14b quer zur Fahrtrichtung F der Sämaschine verschiebbar. Durch ein Betätigen der Verstellglieder 14a, 14b werden die Säaggregate 12c, 12f in die Verschieberichtung x verschoben, sodass eine geeignete Spurweite 106 sowie ein geeigneter Abstand 102 zwischen den Säaggregaten 12c, 12d und den Säaggregaten 12e, 12f einstellbar ist.

Die Sämaschine kann über eine Überwachungseinrichtung verfügen, mittels welcher geprüft werden kann, ob die zu verschiebenden Säaggregate 12c, 12f Bodenkontakt haben, sodass die Steuerungseinrichtung eine Betätigung der Verstellglieder 14a, 14b verhindert, wenn die Säaggregate 12c, 12f Bodenkontakt haben. Wenn die Überwachungseinrichtung erkennt, dass die Säaggregate 12c, 12f sich in einem angehobenen Zustand befinden und somit keinen Bodenkontakt haben, wird die Betätigung der Verstellglieder 14a, 14b zum Verschieben der Säaggregate 12c, 12f quer zur Fahrtrichtung F freigegeben.

Alternativ oder zusätzlich kann die Überwachungseinrichtung dazu eingerichtet sein, zu überprüfen ob eine Verschiebung der zu verschiebenden Säaggregate 12c, 12f auch in Bodenkontakt ermöglicht ist, sodass die Steuerungseinrichtung eine Betätigung der Verstellglieder 14a, 14b freigibt, auch wenn die Säaggregate 12c, 12f Bodenkontakt haben.

Die Steuerungseinrichtung der Sämaschine erlaubt ferner eine Veränderung der Aussaatmenge an den verschiebbaren Säaggregaten 12c, 12f sowie eine Veränderung der Aussaatmenge an den benachbart zu den verschiebbaren Säaggregaten 12c, 12f angeordneten Säaggregaten 12b, 12g. Da der Reihenabstand einzelner Reihen durch das Verschieben der Säaggregate 12c, 12f verkleinert wird, kann es zur Ertragsoptimierung vorteilhaft sein, eine Aussaatmengenreduzierung vorzunehmen.

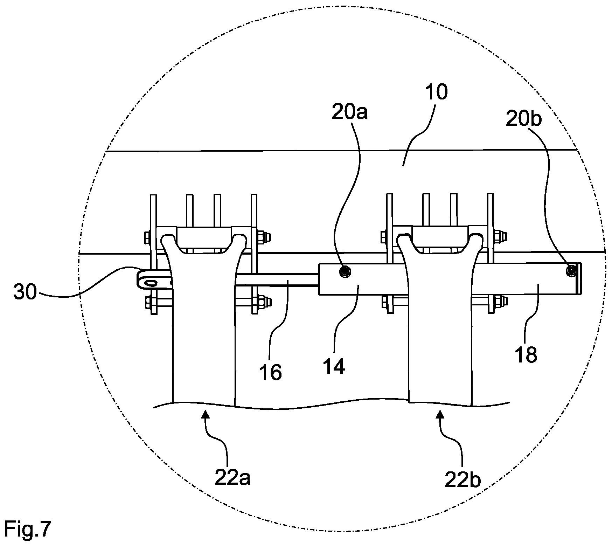

Die Fig. 7 zeigt ein als Hydraulikzylinder ausgebildetes Verstellglied 14, welches eine in Axialrichtung und quer zur Fahrtrichtung F bewegbare Kolbenstange 16 und ein Zylinderrohr 18 aufweist. Das Zylinderrohr 18 ist an einer Scharaufhängung 22b eines Säaggregats 12b befestigt. Die Kolbenstange 16 ist über eine Befestigungsplatte 30 mit einer Scharaufhängung 22a eines Säaggregats 12a verbunden. Das als Hydraulikzylinder ausgebildete Verstellglied 14 weist Hydraulikanschlüsse 20a, 20b auf, über welche die Kammern des als Hydraulikzylinder ausgebildeten Verstellglieds 14 mit Hydraulikdruck beaufschlagbar sind.

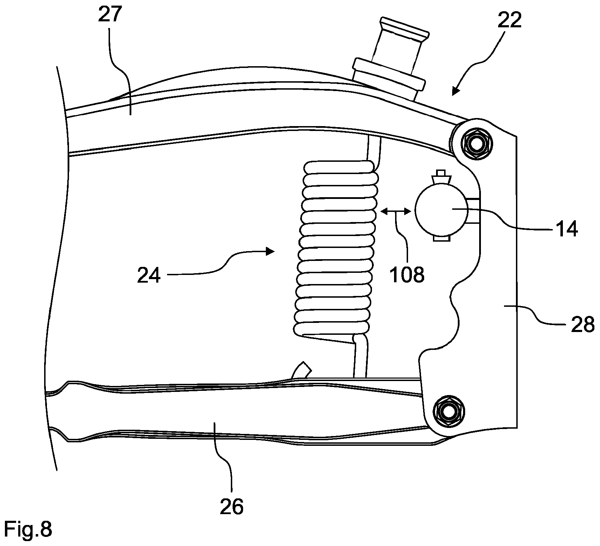

Die Fig. 8 zeigt eine Scharaufhängung 22, welche bei einem Säaggregat 12a-12h einer Sämaschine zum Einsatz kommen kann. Die Scharaufhängung 22 umfasst ein Parallelogrammgestänge mit einem Unterlenker 26 und einem Oberlenker 27. Die Scharaufhängung 22 verfügt über eine mechanische Schardruckverstelleinrichtung 24, wobei der Schardruck über eine Schraubenfeder zwischen dem Unterlenker 26 und dem Oberlenker 27 einstellbar ist. Beispielsweise weist die Feder der Schardruckverstelleinrichtung 24 einen Abstand 108 von zumindest 50mm zu dem Verstellglied 14 auf. Das Verstellglied 14 ist an einem Aufhängekörper 28 befestigt, wobei sich das Verstellglied 14 durch einen von dem Parallelogrammgestänge umschlossenen Raum erstreckt. Folglich ist der Oberlenker 27 oberhalb des Verstellglieds 14 und der Unterlenker 26 unterhalb des Verstellglieds 14 angeordnet. Der Oberlenker 27 und der Unterlenker 26 sind schwenkbar an dem Aufhängekörper 28 angelenkt, wobei der Aufhängekörper 28 zum Einhängen des Säschars in einen Maschinenrahmen 10 der Sämaschine dient.

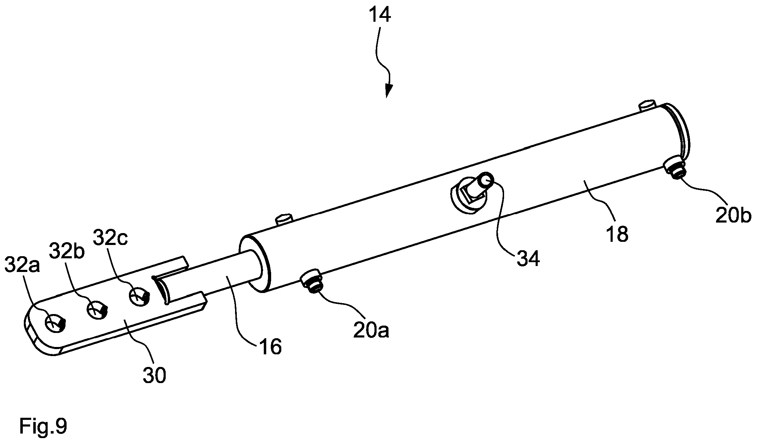

Die Fig. 9 zeigt ein als Hydraulikzylinder ausgebildetes Verstellglied 14, an dessen Kolbenstange 16 eine Befestigungsplatte 30 befestigt ist. Die Befestigungsplatte 30 weist drei voneinander beabstandete Ausnehmungen 32a-32c auf, wobei die Ausnehmungen 32a-32c das Einstellen unterschiedlicher Reihenweiten ermöglichen.

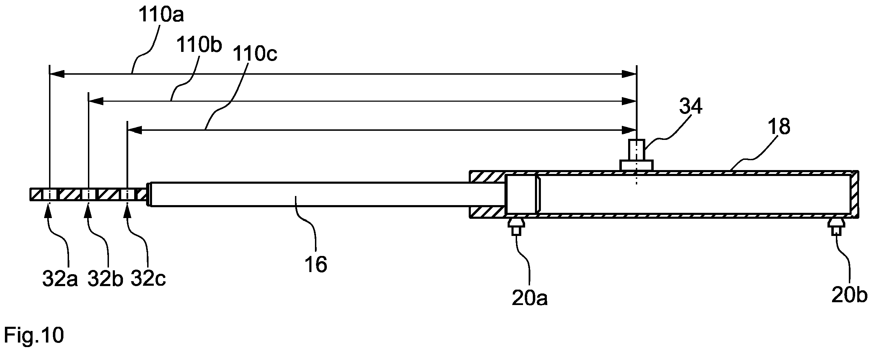

Die Fig. 10 zeigt die drei unterschiedlichen Abstände 110a-110c zwischen den Ausnehmungen 32a-32c und dem Befestigungselement 34. Die Abstände 110a-110c können beispielsweise 700mm, 750mm und 800mm betragen, sodass durch die Verwendung einer der Ausnehmungen 32a-32c zur Befestigung des Verstellglieds 14 entsprechende Reihenweiten eingestellt werden können.

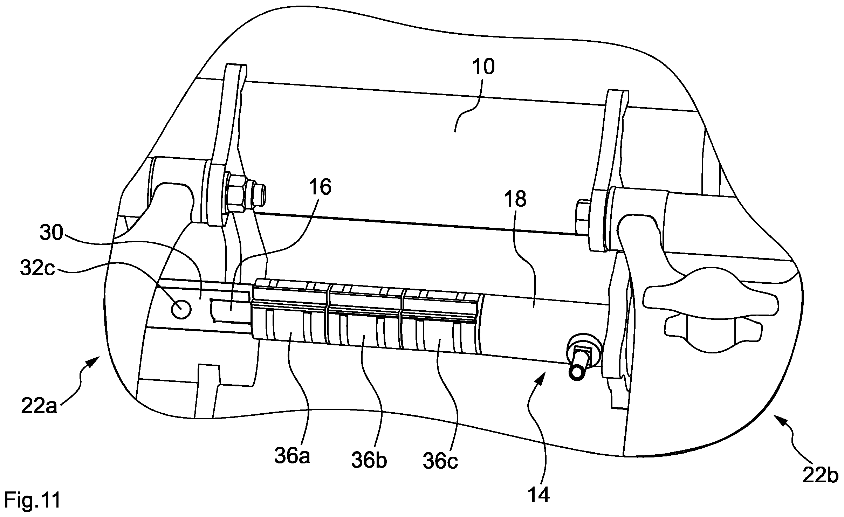

Die Fig. 11 zeigt ein Verstellglied 14, auf dessen Kolbenstange 16 drei Anschlagselemente 36a-36c aufgesetzt sind. Die Anschlagselemente 36a-36c beschränken den Verfahrweg des Verstellglieds 14, sodass sich ohne eine aufwendige Hydrauliksteuerung geeignete Verfahrwege der verschiebbaren Säaggregate 12a-12h einstellen lassen.

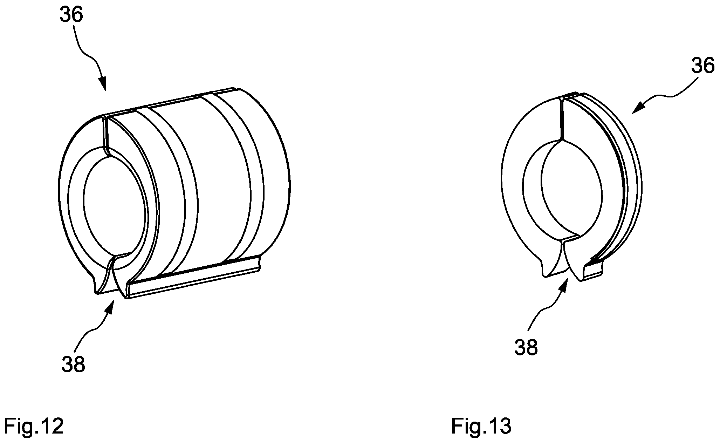

Die Fig. 12 und 13 zeigen unterschiedliche Ausführungsformen von Anschlagselementen 36. Die Anschlagselemente 36 können sich beispielsweise hinsichtlich ihrer Breite unterscheiden, sodass sich durch eine Kombination unterschiedlicher Anschlagselemente 36 ein beabsichtigter Verstellweg für das verschiebbare Säaggregat 12a-12h ergibt.

Die Anschlagselemente 36 sind als Klips ausgebildet und weisen jeweils eine Öffnung 38 auf. Die Öffnung 38 ist zum Aufklipsen der Anschlagselemente 36 auf eine Kolbenstange 16 vergrößerbar. Über eine Feder in Form eines Ringsegments wird vermieden, dass sich die Anschlagselemente 36 während der Verwendung unbeabsichtigt öffnen und sich somit von der Kolbenstange 16 lösen.

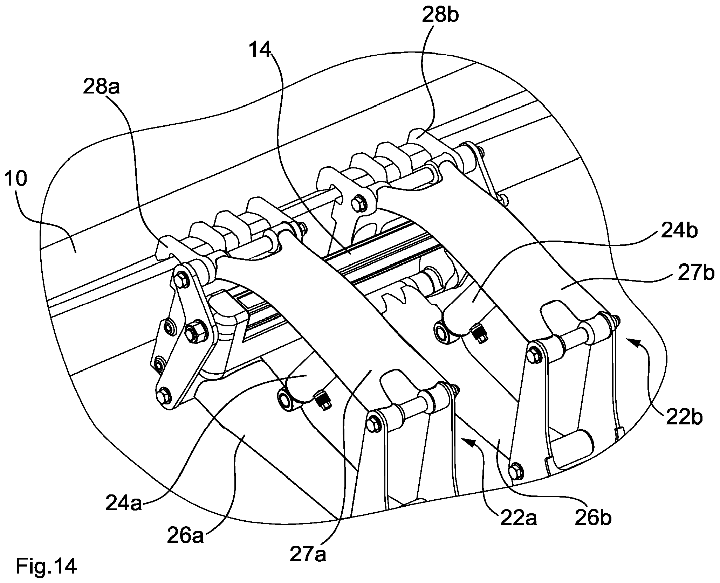

Die Fig. 14 zeigt ein als Linearmotor ausgebildetes Verstellglied 14. Aufgrund der präzisen Einstellbarkeit des als Linearmotor ausgebildeten Verstellglieds 14 sind in diesem Fall keine Anschlagselemente notwendig.

Das Verstellglied 14 erstreckt sich durch zwei als Parallelogrammgestänge ausgebildete Scharaufhängungen 22a, 22b, welche jeweils über die Aufhängekörper 28a, 28b mit dem Maschinenrahmen 10 verbunden sind. Das als Linearmotor ausgebildete Verstellglied 14 verläuft oberhalb der Unterlenker 27a, 27b und unterhalb der Oberlenkers 26a, 26b der Scharaufhängungen 22a, 22b. Zwischen dem Unterlenker 26a und dem Oberlenker 27a ist eine Schardruckverstelleinrichtung 24a angeordnet. Zwischen dem Unterlenker 26b und dem Oberlenker 27b ist eine Schardruckverstelleinrichtung 24b angeordnet.

Die Schardruckverstellung 24 kann auch hydraulisch ausgebildet sein und einen ansteuerbaren Hydraulikzylinder aufweisen. Das als Linearmotor ausgebildete Verstellglied 14 ist dann erneut oberhalb des Unterlenkers 26 und unterhalb des Oberlenkers 27 angeordnet.

### Bezugszeichen

- 10: Maschinenrahmen
- 12a-12h: Säaggregate
- 14, 14a, 14b: Verstellglieder
- 16: Kolbenstange
- 18: Zylinderrohr
- 20a, 20b: Hydraulikanaschlüsse
- 22, 22a, 22b: Scharaufhängungen
- 24, 24a, 24b: Schardruckverstelleinrichtungen
- 26, 26a, 26b: Unterlenker
- 27, 27a, 27b: Oberlenker
- 28, 28a, 28b: Aufhängekörper
- 30: Befestigungsplatte
- 32a-32c: Ausnehmungen
- 34: Befestigungselement
- 36, 36a-36c: Anschlagselemente
- 38: Öffnungen

- 100: Reihenweite
- 102: Abstand
- 104: Abstand
- 106: Spurweite
- 108: Abstand
- 110a-110c: Abstände

- F: Fahrtrichtung
- x: Verschieberichtung

## Patentansprüche

1. Sämaschine, mit
- einem Maschinenrahmen (10); und
- mehreren Säaggregaten (12a-12h) zum Ablegen von Saatgut auf eine landwirtschaftliche Nutzfläche, wobei zumindest ein Säaggregat (12a-12h) quer zur Fahrtrichtung (F) verschiebbar an dem Maschinenrahmen (10) befestigt ist;
wobei die Sämaschine zumindest ein fernsteuerbares Verstellglied (14, 14a, 14b) und eine Steuerungseinrichtung aufweist, wobei das Verstellglied dazu eingerichtet ist, das zumindest eine verschiebbare Säaggregat (12a-12h) quer zur Fahrtrichtung (F) zu verschieben und die Steuerungseinrichtung dazu eingerichtet ist, das zumindest eine Verstellglied (14, 14a, 14b) zu steuern, **gekennzeichnet durch** eine Überwachungseinrichtung, welche dazu eingerichtet ist, zu prüfen, ob das zumindest eine verschiebbare Säaggregat (12a-12h) Bodenkontakt hat, und **dadurch, dass** die Steuerungseinrichtung dazu eingerichtet ist, eine Betätigung des zumindest einen Verstellglieds zu verhindern, wenn das zumindest eine verschiebbare Säaggregat Bodenkontakt hat.

2. Sämaschine nach Anspruch 1,
**dadurch gekennzeichnet, dass** das zumindest eine Verstellglied (14, 14a, 14b) als hydraulischer, pneumatischer oder elektrischer Linearantrieb ausgebildet ist.

3. Sämaschine nach Anspruch 1 oder 2,
**dadurch gekennzeichnet, dass** die Steuerungseinrichtung dazu eingerichtet ist, signalübertragend mit einer Betätigungseinrichtung verbunden zu werden, über welche eine Verschiebung des zumindest einen Säaggregats (12a-12h) aus der Ferne veranlassbar ist.

4. Sämaschine nach Anspruch 3,
**dadurch gekennzeichnet, dass** die Steuerungseinrichtung dazu eingerichtet ist, das zumindest eine Verstellglied (14, 14a, 14b) selbsttätig auf Grundlage eines vorgeplanten Fahrgassensystems einzustellen.

5. Sämaschine nach einem der Ansprüche 1 bis 4, **dadurch gekennzeichnet, dass** die Steuerungseinrichtung dazu eingerichtet ist, die Aussaatmenge an dem zumindest einen verschiebbaren Säaggregat (12a-12h) und/oder einem benachbart zu dem zumindest einen verschiebbaren Säaggregat (12a-12h) angeordneten Säaggregat (12a-12h) unabhängig von den Aussaatmengen der übrigen Säaggregate (12a-12h) zu verändern.

6. Sämaschine nach einem der vorstehenden Ansprüche, **dadurch gekennzeichnet, dass** das zumindest eine Verstellglied (14, 14a, 14b) dazu eingerichtet ist, das zumindest eine verschiebbare Säaggregat (12a-12h) zumindest 100mm, vorzugsweise zumindest 200mm, besonders bevorzugt zumindest 300mm quer zur Fahrtrichtung (F) zu verschieben.

7. Sämaschine nach einem der vorstehenden Ansprüche, **dadurch gekennzeichnet, dass** das zumindest eine Verstellglied (14, 14a, 14b) dazu eingerichtet ist, das zumindest eine verschiebbare Säaggregat (12a-12h) auf einen Abstand (102) von zumindest 800mm, vorzugsweise zumindest 900mm, besonders bevorzugt zumindest 1000mm, zu einem benachbarten Säaggregat (12a-12h) quer zur Fahrtrichtung (F) zu verschieben.

8. Sämaschine nach einem der vorstehenden Ansprüche, **dadurch gekennzeichnet, dass** die Position mehrerer oder sämtlicher Säaggregate (12a-12h) an dem Maschinenrahmen (10) zur Einstellung unterschiedlicher Reihenweiten (100) veränderbar ist.

9. Verfahren zum Einstellen einer Sämaschine nach einem der vorstehenden Ansprüche, mit den Schritten:
- Verschieben zumindest eines Säaggregats der Sämaschine quer zur Fahrtrichtung (F) entlang eines Maschinenrahmens (10) der Sämaschine;
- Überwachen, ob das zumindest eine verschiebbare Säaggregat (12a-12h) Bodenkontakt hat,
wobei das Verschieben des zumindest einen Säaggregats der Sämaschine mittels zumindest eines fernsteuerbaren Verstellglieds (14, 14a, 14b) der Sämaschine erfolgt, und
- Verhindern einer Betätigung des zumindest einen Verstellglieds, wenn das zumindest eine verschiebbare Säaggregat Bodenkontakt hat.

10. Verfahren nach Anspruch 9, **gekennzeichnet durch** zumindest einen der folgenden Schritte:
- Steuern des zumindest einen Verstellglieds (14, 14a, 14b) mittels einer Steuerungseinrichtung der Sämaschine;
- Veranlassen einer Verschiebung des zumindest einen Säaggregats aus der Ferneüber eine signalübertragend mit der Steuerungseinrichtung verbundene Betätigungseinrichtung.

11. Verfahren nach Anspruch 10, **dadurch gekennzeichnet, dass** das Steuern des zumindest einen Verstellglieds (14, 14a, 14b) und/oder das Veranlassen der Verschiebung des zumindest einen Säaggregats selbsttätig durch die Sämaschine auf Grundlage eines der Sämaschine bereitgestellten vorgeplanten Fahrgassensystems erfolgt.

12. Verfahren nach einem der Ansprüche 9 bis 11, **gekennzeichnet durch** den Schritt:
- Verändern der Aussaatmenge an dem zumindest einen verschiebbaren Säaggregat (12a-12h) und/oder einem benachbart zu dem zumindest einen verschiebbaren Säaggregat (12a-12h) angeordneten Säaggregat (12a-12h) unabhängig von den Aussaatmengen der übrigen Säaggregate (12a-12h).

## Claims

1. Sowing machine comprising:
- a machine frame (10); and
- a plurality of sowing units (12a-12h) for depositing seeds on agriculturally productive land, at least one sowing unit (12a-12h) being fastened to the machine frame (10) so as to be displaceable transversely to the direction of travel (F);
the sowing machine having at least one remote-controllable adjustment element (14, 14a, 14b) and a control device, the adjustment element being configured to displace the at least one displaceable sowing unit (12a-12h) transversely to the direction of travel (F) and the control device being configured to control the at least one adjustment element (14, 14a, 14b), **characterized by** a monitoring device configured to check whether the at least one displaceable sowing unit (12a-12h) is in contact with the ground, and in that the control device is configured to prevent the at least one adjustment element from being actuated if the at least one displaceable sowing unit is in contact with the ground.

2. Sowing machine according to claim 1,
**characterized in that** the at least one adjustment element (14, 14a, 14b) is in the form of a hydraulic, pneumatic, or electric linear drive.

3. Sowing machine according to either claim 1 or claim 2,
**characterized in that** the control device is configured to be connected for signal transmission to an actuation device, by means of which displacement of the at least one sowing unit (12a-12h) can be initiated remotely.

4. Sowing machine according to claim 3,
**characterized in that** the control unit is configured to adjust the at least one adjustment element (14, 14a, 14b) automatically on the basis of a pre-planned track system.

5. Sowing machine according to any of claims 1 to 4,
**characterized in that** the control device is configured to change the sowing volume in the at least one displaceable sowing unit (12a-12h) and/or in a sowing unit (12a-12h) arranged adjacently to the at least one displaceable sowing unit (12a-12h) irrespectively of the sowing volumes of the other sowing units (12a-12h).

6. Sowing machine according to any preceding claim,
**characterized in that** the at least one adjustment element (14, 14a, 14b) is configured to displace the at least one displaceable sowing unit (12a-12h) transversely to the direction of travel (F) by at least 100 mm, preferably by at least 200 mm, particularly preferably by at least 300 mm.

7. Sowing machine according to any preceding claim,
**characterized in that** the at least one adjustment element (14, 14a, 14b) is configured to displace the at least one displaceable sowing unit (12a-12h) transversely to the direction of travel (F) to a distance (102) of at least 800 mm, preferably at least 900 mm, particularly preferably at least 1000 mm, from an adjacent sowing unit (12a-12h).

8. Sowing machine according to any preceding claim,
**characterized in that** the position of a plurality or all of the sowing units (12a-12h) on the machine frame (10) can be changed to set different row widths (100).

9. Method for adjusting a sowing machine according to any preceding claim, comprising the steps of:
- displacing at least one sowing unit of the sowing machine transversely to the direction of travel (F) along a machine frame (10) of the sowing machine;
- monitoring whether the at least one displaceable sowing unit (12a-12h) is in contact with the ground,
wherein the at least one sowing unit of the sowing machine is displaced by means of at least one remote-controllable adjustment element (14, 14a, 14b) of the sowing machine, and
- preventing the at least one adjustment element from being actuated when the at least one displaceable sowing unit is in contact with the ground.

10. Method according to claim 9,
**characterized by** at least one of the following steps:
- controlling the at least one adjustment element (14, 14a, 14b) by means of a control device of the sowing machine;
- remotely initiating displacement of the at least one sowing unit by means of an actuation device connected to the control device for signal transmission.

11. Method according to claim 10,
**characterized in that** controlling the at least one adjustment element (14, 14a, 14b) and/or initiating the displacement of the at least one sowing unit is/are carried out automatically by the sowing machine on the basis of a pre-planned tramline system made available to the sowing machine.

12. Method according to any of claims 9 to 11,
**characterized by** the step of:
- changing the sowing volume in the at least one displaceable sowing unit (12a-12h) and/or in a sowing unit (12a-12h) arranged adjacently to the at least one displaceable sowing unit (12a-12h) irrespectively of the sowing volumes of the other sowing units (12a-12h).

## Revendications

1. Semoir, comprenant
- un châssis de machine (10) ; et
- plusieurs éléments semeurs (12a-12h) pour le dépôt de semence sur une surface cultivable agricole, dans lequel au moins un élément semeur (12a-12h) est fixé au châssis de machine (10) de manière mobile transversalement à la direction de déplacement (F) ;
dans lequel le semoir présente au moins un organe de réglage (14, 14a, 14b) pouvant être télécommandé et un dispositif de commande, dans lequel l'organe de réglage est conçu pour déplacer l'au moins un élément semeur mobile (12a-12h) transversalement à la direction de déplacement (F) et le dispositif de commande est conçu pour commander l'au moins un organe de réglage (14, 14a, 14b), **caractérisé par** un dispositif de surveillance, qui est conçu pour vérifier si l'au moins un élément semeur mobile (12a-12h) est en contact avec le sol et en ce que le dispositif de commande est conçu pour empêcher un actionnement de l'au moins un organe de réglage lorsque l'au moins un élément semeur est en contact avec le sol.

2. Semoir selon la revendication 1,
**caractérisé en ce que** le au moins un organe de réglage (14, 14a, 14b) est conçu sous la forme d'un actionneur linéaire hydraulique, pneumatique ou électrique.

3. Semoir selon la revendication 1 ou 2,
**caractérisé en ce que** le dispositif de commande est conçu pour être relié de manière à transmettre les signaux avec un dispositif d'actionnement, par le biais duquel un déplacement de l'au moins un élément semeur (12a-12h) peut être ordonné à distance.

4. Semoir selon la revendication 3,
**caractérisé en ce que** le dispositif de commande est conçu pour régler le au moins un organe de réglage (14, 14a, 14b) automatiquement sur la base d'un système de jalonnage planifié au préalable.

5. Semoir selon l'une quelconque des revendications 1 à 4,
**caractérisé en ce que** le dispositif de commande est conçu pour modifier le débit de semence sur le au moins un élément semeur mobile (12a-12h) et/ou un élément semeur (12a-12h) agencé au voisinage du au moins un élément semeur mobile (12a-12h) indépendamment des débits de semence des autres éléments semeurs (12a-12h).

6. Semoir selon l'une quelconque des revendications précédentes,
**caractérisé en ce que** le au moins un organe de réglage (14, 14a, 14b) est conçu pour déplacer le au moins un élément semeur mobile (12a-12h) d'au moins 100 mm, de préférence d'au moins 200 mm, de manière particulièrement préférée d'au moins 300 mm transversalement à la direction de déplacement (F).

7. Semoir selon l'une quelconque des revendications précédentes,
**caractérisé en ce que** le au moins un organe de réglage (14, 14a, 14b) est conçu pour déplacer le au moins un élément semeur mobile (12a-12h) sur une distance (102) d'au moins 800 mm, de préférence d'au moins 900 mm, de manière particulièrement préférée d'au moins 1000 mm, par rapport à un élément semeur (12a-12h) voisin transversalement à la direction de déplacement (F).

8. Semoir selon l'une quelconque des revendications précédentes,
**caractérisé en ce que** la position de plusieurs ou de tous les éléments semeurs (12a-12h) sur le châssis de machine (10) peut être modifiée pour le réglage de différents écartements (100).

9. Procédé de réglage d'un semoir selon l'une quelconque des revendications précédentes, comprenant les étapes :
- de déplacement d'au moins un élément semeur du semoir transversalement à la direction de déplacement (F) le long d'un châssis de machine (10) du semoir ;
- de surveillance de l'éventuel contact avec le sol du au moins un élément semeur mobile (12a-12h),
dans lequel le déplacement du au moins un élément semeur du semoir est effectué au moyen d'au moins un organe de réglage (14, 14a, 14b) du semoir pouvant être télécommandé et
- d'inhibition de l'actionnement du au moins un organe de réglage lorsque le au moins un élément semeur mobile est en contact avec le sol.

10. Procédé selon la revendication 9,
**caractérisé par** au moins une des étapes suivantes :
- commande du au moins un organe de réglage (14, 14a, 14b) au moyen d'un dispositif de commande du semoir ;
- instruction d'un déplacement du au moins un élément semeur à distance par le biais d'un dispositif d'actionnement relié au dispositif de commande de manière à transmettre les signaux.

11. Procédé selon la revendication 10,
**caractérisé en ce que** la commande du au moins un organe de réglage (14, 14a, 14b) et/ou l'instruction du déplacement du au moins un élément semeur sont effectuées automatiquement par le semoir sur la base d'un système de jalonnage planifié au préalable fourni au semoir.

12. Procédé selon l'une quelconque des revendications 9 à 11,
**caractérisé par** l'étape :
- de modification du débit de semence sur le au moins un élément semeur mobile (12a-12h) et/ou un élément semeur (12a-12h) agencé au voisinage du au moins un élément semeur mobile (12a-12h) indépendamment des débits de semence des autres éléments semeurs (12a-12h).
